# EUROPÄISCHE PATENTSCHRIFT

(11) **EP 2 748 298 B1**
(45) Veröffentlichungstag und Bekanntmachung des Hinweises auf die Patenterteilung: **27.09.2017**
(21) Anmeldenummer: 12756141.3
(22) Anmeldetag: 23.08.2012
(51) Int. Cl.: C12C 7/04, C12C 7/14, C12C 7/22, C12C 13/00

(54) **BIERBRAUVERFAHREN UND -VORRICHTUNG**
BEER BREWING METHOD AND APPARATUS
PROCÉDÉ DE ET DISPOSITIF POUR BRASSAGE DE LA BIÈRE

(30) Priorität: 26.08.2011 DE 102011081648
(43) Veröffentlichungstag der Anmeldung: 02.07.2014
(73) Patentinhaber: Krones AG, 93073 Neutraubling (DE)
(72) Erfinder: SCHNEID, Ralph, 93073 Neutraubling (DE)
(74) Vertreter: Grünecker Patent- und Rechtsanwälte PartG mbB
(86) Internationale Anmeldenummer: PCT/EP2012/066413
(87) Internationale Veröffentlichungsnummer: WO 2013/030082

(56) Entgegenhaltungen:
- EP-A1- 1 281 751
- WO-A1-2007/136252
- WO-A1-2007/136255
- WO-A1-2007/136257
- WO-A1-2007/136258
- DE-A1- 2 450 636
- GB-A- 879 470

## Beschreibung

### Gebiet der Erfindung

Die vorliegende Erfindung betrifft ein Verfahren zum Brauen von Bier insbesondere unter Berücksichtigung der Energieeffizienz desselben.

### Stand der Technik

Im Sudhaus wird aus stärkehaltigen Braurohstoffen, z. B. Gerste, Malz, Reis oder Mais, eine Bierwürze hergestellt, die unter Zugabe von Hefe vergoren wird. Die Braurohstoffe werden in einer Mühle zerkleinert und mit Wasser vermischt und somit eine Maische hergestellt. Zweck des Maischprozesses ist unter anderem der Stärkeabbau. In der Fest-Flüssig-Trennung, welche meist in einem Läuterbottich oder Maischefilter stattfindet, werden die löslichen (flüssigen) Bestandteile von den unlöslichen Bestandteilen der Maische abgetrennt. Während die verbleibenden unlöslichen Bestandteile, die Treber, aus der Maische abgetrennt und anderen Verwendungszwecken z. B. als Tierfutter oder zur Energiegewinnung zugeführt werden, wird die abgetrennte flüssige Phase, die Würze, in einer Würzepfanne unter Zugabe von Hopfen gekocht.

In einem ersten Schritt wird die sogenannte Vorderwürze abgezogen, d. h. man lässt die Flüssigkeit der im Läuterbottich oder Maischefilter (oder anderen Filtrationsgeräten) befindlichen Maische ablaufen, wobei die Festbestandteile, wie beispielsweise Spelzen, nach dem Ablagern auf dem Boden des Läuterbottichs als Filterkuchen/Filterschicht wirken, der die Trubstoffe aus der Flüssigphase zurückhält.

Der Treberkuchen enthält noch relativ große Mengen Extrakt. Um möglichst wenig Extrakt in den Trebern zurückzulassen, muss in einem zweiten Schritt der noch in dem Treberkuchen verbliebene Extrakt mit Wasser (Anschwänzwasser) ausgewaschen werden. Die Würze, die durch das Auswaschen mithilfe des Anschwänzwassers gewonnen wird, wird Nachguss genannt. Der letzte Nachguss, welcher der Würzepfanne nicht mehr zugeführt wird, wird Glattwasser genannt. Das Glattwasser wird also nicht in die Berechnung des gewünschten Würzevolumens (der Pfannenvollmenge) einbezogen. Es ist im Stand der Technik bekannt, dieses Glattwasser als Einmaischwasser oder Anschwänzwasser für nachfolgende Sude wiederzuverwenden. Insbesondere ist es auch bekannt, die letzten Nachgüsse bei der Herstellung von Bockbier, die keinen genügenden Würzegehalt mehr aufweisen, als Einmaischwasser für einen nachfolgenden Sud für die Herstellung von Einfachbier zu verwenden (W. Kunze, Technologie Brauer und Mälzer, Berlin, VLP, 1998, Seite 245). Hierbei wird aber das Volumen beim Würzekochen des Einfachbieres nicht reduziert.

Die Erhöhung der Extraktausbeute durch das Auswaschen des Treberkuchens mithilfe des Anschwänzwassers führt zu einer Erhöhung des Sudvolumens, d. h. der zu kochenden Würze, wodurch sich der Energiebedarf gegenüber einem Brauprozess, in dem lediglich die Vorderwürze der Würzepfanne zum Kochen zugeführt wird, signifikant erhöht.

In der GB 879 470 A wird ein Verfahren zur Herstellung von Bierwürze beschrieben, in dem eine Fest-Flüssig-Trennung von Maische zum Gewinnen einer Würze und ein Aufteilen der Würze in einen hochkonzentrierten Teil mit einer Vorderwürze und einen niedriger konzentrierten Teil ausgeführt werden. In der WO 2007/136255 A1 wird eine Anlage zur Würzeherstellung beschrieben, die ein Maischgefäß, eine Maischekolonne, Separatoren, Extraktionsgefäße und eine Würzekolonne sowie eine Zentrifuge und Kühleinrichtung umfasst.

Der Erfindung liegt daher die Aufgabe zugrunde, den bekannten Brauprozess unter Beibehalten des zur Ausbeuteerhöhung erfolgenden Auswaschens des Treberkuchens energetisch vorteilhafter zu gestalten.

### Beschreibung der Erfindung

Die oben genannte Aufgabe wird durch das Verfahren gemäß Anspruch 1 gelöst.

Das beanspruchte Verfahren zur Herstellung von Bier umfasst die Schritte:
Bereitstellen einer Maische;
Ausführen einer Fest-Flüssig-Trennung der Maische zum Gewinnen einer (Bier-)Würze;
Aufteilen der Würze in a) einen hochkonzentrierten Teil mit einer Vorderwürze und b) einen niedriger konzentrierten Teil, wobei der niedriger konzentrierte Teil zumindest 5 % der Extraktmenge der Maische, aufweist;
Verarbeiten des hochkonzentrierten Teils der Würze, wobei das Verarbeiten das Verdünnen des hochkonzentrierten Teils der Würze vor dem Abfüllen des Biers umfasst und
Leiten zumindest eines Teils des niedriger konzentrierten Teils der Würze zu einem Maischvorgang (der beispielsweise in einem Maischebehälter ausgeführt wird), wobei
das Verarbeiten des hochkonzentrierten Teils der Würze das Kochen der Würze in einer Würzepfanne vor dem Verdünnen umfasst.

Die Fest-Flüssig-Trennung kann beispielsweise durch Läutern (in einem Läuterbottich) oder Filtern (in einem Maischefilter) erfolgen.

Erfindungsgemäß wird also nicht die gesamte durch Läutern oder Filtern gewonnene Würze weiterverarbeitet, denn es wird ein niedriger konzentrierter Teil derselben abgezweigt und zum Maischen eines folgenden Suds verwendet. Insbesondere wird ein Teil der bei einem ersten Läutern/Filtern einer ersten Maische (des ersten Suds) in den Nachgüssen gewonnene Extrakt der zweiten nachfolgenden Maische (des zweiten Suds) zugeführt wird. Hierbei sei betont, dass der niedriger konzentrierte Teil nicht lediglich aus Glattwasser besteht, wie das an sich im Stand der Technik bekannt ist. Der dem Maischebehälter zugeführte niedriger konzentrierte Teil der Würze weist vielmehr zumindest 5 % der Extraktmenge der Maische auf. Der hochkonzentrierte Teil der Würze weist einen höheren Extraktgehalt als der niedriger konzentrierte Teil der Würze auf.

In dem erfindungsgemäßen Verfahren kann die Zugabe des niedriger konzentrierten Teils der Würze zur Maische des Folgesudes auf einmal erfolgen, d.h. die Nachgüsse werden in einem Puffergefäß gespeichert und während des Einmaischprozesses dem Maischbottich zugegeben. Alternativ kann eine direkte Zugabe des niedriger konzentrierten Teils während des gesamten Maischprozesses erfolgen, d. h. die Menge an Nachgüssen welche abgeläutert wird, wird unmittelbar in den Maischbottich geleitet. Somit wird die Maische über eine längere Zeit stets sukzessive verdünnt. Bei dieser unmittelbaren Zuleitung des niedriger konzentrierten Teils der Würze in den Maischebottich kann ein Ausgleichsbehälter Verwendung finden.

Wenn in diesem Dokument die Rede von Zugabe des niedriger konzentrierten Teils der Würze in den Maischbottich ist, dann kann darunter auch eine Zugabe zu einer Nassschrotmühle, Einteigschnecke oder Einmaischgefäß verstanden werden.

In dem erfindungsgemäßen Verfahren wird insbesondere die Berechnung und Bereitstellung der Braurohstoffmengen auf ein fiktives, gegenüber dem eigentlichen Ausschlagvolumen, das aus einer Würzepfanne ausgeschlagen wird, deutlich erhöhtes Sudvolumen bezogen. Beispielsweise erfolgt die Bereitstellung der Braurohstoffmengen für ein um mindestens 10 %, oder mindestens 20 % oder mindesten 30 % gegenüber dem tatsächlichen Ausschlagvolumen erhöhtes Volumen.

Wie bereits oben ausgeführt, wird mit dem Begriff der Vorderwürze der ohne Zuführen weiteren Wassers (Anschwänzwassers) von der Maische abgetrennte flüssige Anteil bezeichnet. Insbesondere kann die Vorderwürze zur Erhöhung der Anlageneffizienz nach oben abgezogen werden. Je nach gewünschtem Extraktgehalt bzw. gewünschtem einer Würzepfanne zur weiteren Verarbeitung zugeführten Volumens der Würze kann der dem Maischebehälter zugeführte niedriger konzentrierte Teil der Würze zumindest 5 %, insbesondere zumindest 10 %, weiterhin insbesondere zumindest 15 oder 20 % oder 25 % der Extraktmenge der Maische aufweisen.

Dadurch dass also ein Teil des durch Anschwänzen gewonnenen Nachgusses nicht weiterverarbeitet wird, sondern zumindest teilweise dem Maischebehälter für den nachfolgenden Sud wieder zugeführt wird, wird Energie für die Weiterverarbeitung, d. h. Kochung der Würze aufgrund des gegenüber dem oben beschriebenen Stand der Technik geringeren Volumens gespart. Insbesondere wird ein geringeres Würzevolumen in die Würzepfanne geleitet, also dem Kochvorgang zugeführt. Beispielsweise umfasst der niedriger konzentrierte Teil der Würze, der dem Maischebehälter wieder zugeführt wird, zumindest 65 % der Nachgussmenge, insbesondere zumindest 70 % der Nachgussmenge.

Das Leiten der flüssigen Phase (der Würze) aus dem Läuterbottich oder dem Maischefilter oder einem anderen Gerät zur Fest-Flüssig-Trennung entweder a) in eine Würzepfanne oder ein mit dieser verbundenes Vorlaufgefäß oder b) in den Maischebehälter oder ein mit diesem verbunden Puffergefäß kann in Reaktion auf eine Stammwürzemessung am Ausgang des Läuterbottiches oder des Maischefilters erfolgen. Die nach Umschalten auf den Maischebehälter oder ein mit diesem verbunden Puffergefäß noch abzuläuternde Würze, die dem Maischebottich und nicht der Würzepfanne zugeleitet wird, kann mit z.B. vollem Hackwerkeinsatz (beispielsweise Erhöhung der Umdrehungsgeschwindigkeit oder mittels Tiefschnitt) sehr trübe abgeläutert werden, wodurch die Läutergeschwindigkeit und somit die Kapazität der Sudanlage erhöht wird.

Der niedriger konzentrierte Teil der Würze kann auch Glattwasser umfassen. Dieser, dem Maischebehälter zugeführte Anteil des Nachgusses muss somit nicht in der Würzepfanne gekocht werden, wodurch sich ein geringeres Pfannevollvolumen ergibt und somit der Energiebedarf für den Vorgang des Kochens in der Würzepfanne verringert wird. Ebenso erfolgt die dem Kochen folgende Kühlung der Würze mit einem gegenüber dem oben beschriebenen Stand der Technik geringeren Volumen.

Wenn in dieser Beschreibung die Rede von Würzkochen ist, dann ist die thermische Behandlung der Würze gemeint, die alle möglichen Verfahren der Würzekochung wie auch die Verfahrensweise der Würzeheißhaltung anstelle der Würzekochung beinhaltet.

Bei dem erfindungsgemäßen Verfahren wird die bereitzustellende Braurohstoffmenge auf ein fiktives, gegenüber dem tatsächlich ausgeschlagenen Würzevolumen deutlich erhöhtes, Sudvolumen berechnet. Der Maischprozess, welcher auf einem relativ niedrigen Temperaturniveau stattfindet, wird für ein dem oben beschrieben Stand der Technik vergleichbaren Volumen ausgeführt, das Volumen in der Würzepfanne ist jedoch signifikant kleiner als im Stand der Technik. Zudem kann zumindest ein Teil des niedriger konzentrierten Teils der Würze einer Maische während eines Maischprozesses zugeführt werden, um die Temperatur der Maische zu erhöhen, so dass die beim Maischvorgang erforderliche primäre Energie gegenüber dem Stand der Technik verringert werden kann. Auch kann bereits ein Teil des niedriger konzentrierten Teils der Würze einem Einmaischprozess zugeführt werden.

Neben der Einsparung primärer Energie stellt das erfindungsgemäße Verfahren die Vorteile einer Erhöhung der Anlagenkapazität durch Verkürzung des Läuterungs-/Filterprozesses der Maische und dadurch eine Erhöhung der Sudfolge sowie eine Reduzierung der Leistungspeaks für Dampf- und Kälteanlagen, die in der Weiterverarbeitung des hochkonzentrierten Teils der Würze Verwendung finden, bereit.

Da ein gewisser Teil des Nachgusses nicht für die Weiterverarbeitung verwendet wird, ist die Konzentration (gemessen in °Plato) der Würze, die der Würzepfanne zugeführt wird, gegenüber dem oben beschriebenen Verfahren des Stands der Technik erhöht. Um die gewünschte Konzentration eines fertig hergestellten Bieres (also nicht spezieller Biersorten wie Starkbier oder dgl.) zu erhalten, umfasst das Verarbeiten des hochkonzentrierten Teils der Würze erfindungsgemäß das Verdünnen dieses hochkonzentrierten Teils der Würze vor dem Abfüllen des Bieres.

Das Verarbeiten kann das Abkühlen der gekochten Würze vor, während oder unmittelbar nach dem Verdünnen umfassen. Eine Verdünnung nach der Kühlung der Würze in einem Würzekühler hat den Vorteil, dass der Würzekühler kleiner ausgelegt werden kann, jedoch wird in diesem Fall vorzugsweise Kaltwasser (nicht erwärmtes Wasser) zur Verdünnung verwendet. Zudem kann das Verarbeiten des hochkonzentrierten Teils der Würze das Filtern der abgekühlten gekochten Würze vor dem Verdünnen umfassen. Zum Beispiel kann es sich bei diesem Filtern um die Filtration der Würze (Heißtrubentfernung) und/oder die Filtration des Jungbieres handeln.

Auch kann das Verarbeiten des hochkonzentrierten Teils der Würze das Vergären der Würze mithilfe von Hefekulturen umfassen, wobei das Verdünnen zumindest teilweise vor dem Vergären erfolgt. Da Hefe bei hohen Zuckerkonzentrationen nicht effektiv arbeitet, kann zumindest ein erster Verdünnungsschritt vorteilhafterweise vor dem Gärprozess ausgeführt werden. Auch kann ein Verdünnen der Würze bei Eintritt in einem Whirlpool, in dem nicht gelösten Hopfenbestandteile und ausgefallenes Eiweiß entfernt werden, erfolgen. Der Zeitpunkt und die Art der Verdünnung können also sehr flexibel gehandhabt werden. Insbesondere kann die Verdünnung in mehreren Schritten erfolgen. So kann beispielsweise eine erste Verdünnung vor der Gärung auf eine erste Konzentration und eine zweite Verdünnung direkt vor der Abfüllung auf eine gewünschte Endkonzentration erfolgen.

Gemäß einer Weiterbildung wird der zumindest eine Teil des niedrigkonzentrierten Teils der Würze vor dem Leiten desselben in den Maischebehälter aufbereitet, wobei das Aufbereiten insbesondere unter Zugabe von Aktivkohle oder durch Filtration erfolgt. Der zumindest eine Teil des niedriger konzentrierten Teils der Würze kann insbesondere in einen Pufferbehälter und von diesem in den Maischebehälter geleitet werden. Die Aufbereitung dieses Teils kann dann vorzugsweise in dem Pufferbehälter erfolgen.

Die Wiederverwendung des niedriger konzentrierten Teils der Würze kann somit variabel gestaltet werden, wobei zu beachten ist, das erfindungsgemäß immer zumindest ein Teil des niedriger konzentrierten Teils der Würze dem Maischebehälter für den nachfolgenden Sud zugeführt wird.

Zur Lösung der oben genannten Aufgabe stellt die vorliegende Erfindung auch eine Vorrichtung gemäß Anspruch 12 bereit. Die beanspruchte Vorrichtung zum Brauen von Bier umfasst
einen Maischebehälter, der dazu ausgebildet ist, eine Maische mit Bierrohstoffen und Wasser aufzunehmen;
ein Gerät zur Fest-Flüssig-Trennung, insbesondere ein Läuterbottich oder ein Maischefilter, das dazu ausgebildet ist, die Würze aus der Maische abzuläutern oder zu filtern;
eine Würzepfanne;
eine Leitungseinrichtung, die einen Ausgang des Geräts zur Fest-Flüssig-Trennung wahlweise mit a) der Würzepfanne oder einem mit dieser verbundenen Vorlaufgefäß oder b) dem Maischebehälter oder einem mit diesem verbunden Puffergefäß verbindet;
eine Steuerungseinrichtung, die dazu ausgebildet ist, einen hochkonzentrierten Teil der Würze mit einer Vorderwürze über die Leitungseinrichtung zu der Würzepfanne oder dem mit dieser verbundenen Vorlaufgefäß zu leiten und einen niedriger konzentrierten Teil der Würze, wobei der niedriger konzentrierte Teil zumindest 5 % der Extraktmenge der Maische, aufweist, zu dem Maischebehälter oder einem mit diesem verbunden Puffergefäß zu leiten; und
eine Verdünnungseinrichtung, die dazu ausgebildet ist, die Würze nach Austritt aus der Würzepfanne mit Wasser zu verdünnen.

Die Verdünnungseinrichtung kann zur Verdünnung der Würze verwendet werden und/oder dazu verwendet werden, Jungbier zu verdünnen.

Gemäß einer Weiterbildung umfasst die Vorrichtung eine Messeinheit, die zum Messen des Stammwürzegehalts der Würze am Ausgang des zum Läutern verwendeten Geräts zur Fest-Flüssig-Trennung, z.B. eines Läuterbottiches oder eines zum Filtern verwendeten Maischefilters, ausgebildet ist, und in der die Steuerungseinrichtung dazu ausgebildet ist, den hochkonzentrierten Teil der Würze und den niedriger konzentrierten Teil der Würze über die Leitungseinrichtung in Reaktion auf die von der Messeinheit vorgenommenen Messung zu leiten.

Weiterhin kann die Vorrichtung eine Gäreinrichtung umfassen, und in diesem Fall ist die Verdünnungseinrichtung dazu ausgebildet, die Würze vor dem Eintritt in oder nach dem Austritt aus der Gäreinrichtung zu verdünnen.

Im Folgenden werden Ausführungsformen eines erfindungsgemäßen Verfahrens unter Bezugnahme auf die Zeichnung beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.
Figur 1 veranschaulicht Volumenströme gemäß einem Beispiel des erfindungsgemäßen Bierbrauverfahrens, in dem ein großer Teil des Nachgusses aus dem Läuterbottich nicht in die Würzepfanne, sondern in den Maischebehälter geleitet wird.
Figur 2 zeigt Volumenprofile für ein klassisches Bierbrauverfahren, ein High-Gravity-Bierbrauverfahren und ein Beispiel des erfindungsgemäßen Bierbrauverfahrens, in dem eine Verdünnung des Bieres unmittelbar vor der letzten Filtration und Abfüllung erfolgt.
Figur 3 zeigt Volumenprofile für ein klassisches Bierbrauverfahren, ein High-Gravity-Bierbrauverfahren und ein Beispiel des erfindungsgemäßen Bierbrauverfahrens, in dem eine Verdünnung der Bierwürze unmittelbar vor der Gärung und bei der Filtration erfolgt.
Figur 4 zeigt ein Beispiel für eine Sudfolge unter Verwendung von Nachgüssen eines vorherigen Suds für einen folgenden Sud.
Figur 5 veranschaulicht beispielhaft die Energieersparnis, die mit dem erfindungsgemäßen Verfahren erreicht werden kann.
Figur 6 veranschaulicht ein Beispiel für einen Maischvorgang, der unter Zusetzung einer Nachgussmenge erfolgt.

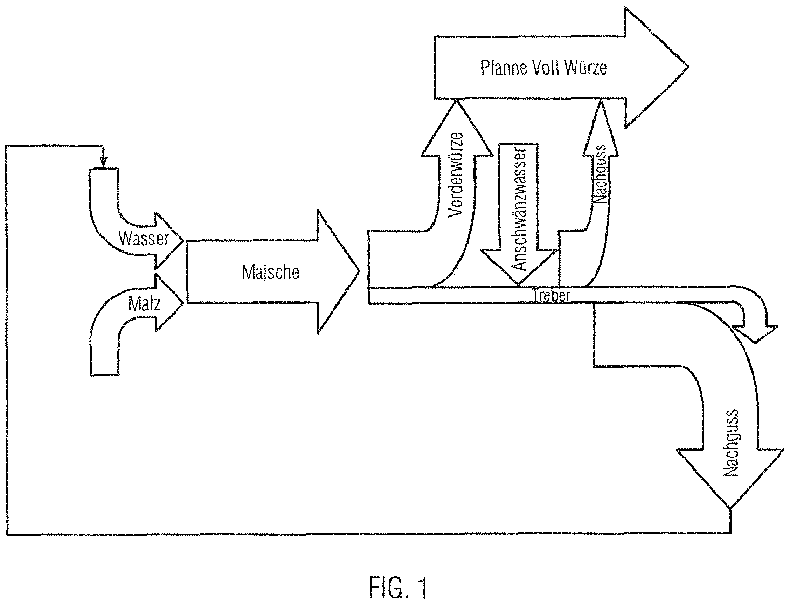

In Figur 1 werden Volumina für ein Beispiel des erfindungsgemäßen Verfahrens zum Brauen von Bier gezeigt. Aus Wasser und Malz wird eine Maische in einem Maischebehälter (nicht dargestellt) hergestellt. In einem Läutergerät (nicht dargestellt) wird aus der Maische die Vorderwürze abgezogen und einer Würzepfanne (nicht dargestellt) zugeführt. Unter Zugabe von Anschwänzwasser wird der Nachguss gewonnen. Erfindungsgemäß wird der überwiegende Teil des Nachgusses nicht der Würzepfanne, sondern dem Maischebehälter zugeführt. Gegebenenfalls wird auch Glattwasser dem Maischebehälter zugeführt. Die Pfannenvollmenge wird also durch die Vorderwürze und einem Teil des Nachgusses erreicht. Im klassischen Bierbrauverfahren, wie es im einleitenden Abschnitt beschrieben wurde, gelangt hingegen der gesamte Nachguss in die Würzepfanne und muss in derselben erhitzt werden. So lässt sich erfindungsgemäß beispielsweise in einem Batchbetrieb ä 180 hl Heißwürze mit einer Konzentration von 24,2 °P und 10,5 Suden pro 24 Stunden unter Verwendung von 49476 kg Extrakt pro 24 Stunden ein Würzevolumen von 1890 hl herstellen.

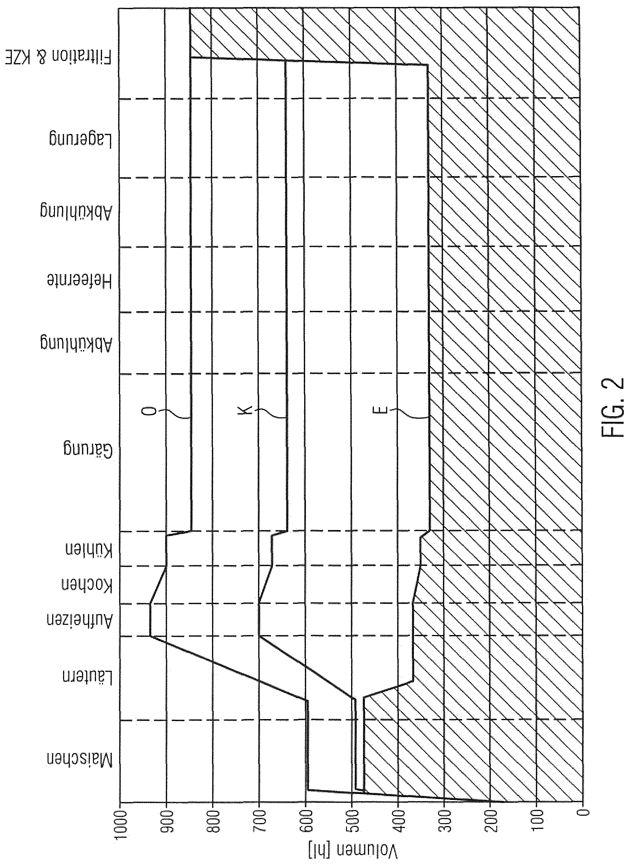

Figur 2 zeigt einen Vergleich der in jeweiligen Prozessstufen eines klassischen (Kurve O), eines High-Gravity- (Kurve K) und eines Beispiels eines erfindungsgemäßen Brauvorgangs (Kurve E) involvierten Volumina. Die Ordinate in Figur 2 zeigt das Volumen in hl an, die Abszisse gibt nicht-linear den Zeitverlauf der aufgeführten Schritte wieder. Die schraffierte Fläche zeigt die bei dem Beispiel eines erfindungsgemäßen Brauvorgangs involvierten Volumina für den Fall, dass eine Verdünnung des hergestellten Bieres erst unmittelbar nach der abschließenden Filtration und vor der Kurzzeiterhitzung (KZE) erfolgt. Nach dem Läutern erfolgt die Weiterverarbeitung der Würze mit Volumina unterhalb von 400 hl, so dass gegenüber dem klassischen und dem High-Gravity-Brauverfahren weniger primäre Energie aufgewendet werden muss. Erst unmittelbar nach der Filtration und vor der Kurzzeiterhitzung wird das Bier auf das schließlich gewünschte Volumen von über 800 hl mit der gewünschten Verkaufsbierstammwürze verdünnt.

Die obere Kurve O in Figur 2 zeigt hingegen die involvierten Volumina im klassischen Bierbrauverfahren, wie es im einleitenden Abschnitt der Anmeldung beschrieben wurde. Es ist deutlich erkennbar, dass in den energieintensiven Prozessschritten des Kochens und Kühlens im Vergleich zu dem erfindungsgemäßen Verfahren deutlich größere Volumina verarbeitet werden müssen.

Die mittlere Kurve K zeigt die involvierten Volumina im High-Gravity-Brauverfahren, wie es ebenfalls im Stand der Technik bekannt ist. Beim High-Gravity-Brauverfahren werden im allgemeinen Maischen mit gegenüber dem klassischen Verfahren erhöhtem Stammwürzegehalt verwendet und es wird das resultierende Jungbier später auf den gewünschten Extrakt- oder Alkoholgehalt verdünnt. Im High-Gravity-Brauverfahren entspricht im Allgemeinen das berechnete Sudvolumen im Wesentlichen dem Ausschlagvolumen. Die gegenüber dem erfindungsgemäßen Verfahren signifikant höheren involvierten Volumina können an Figur 2 abgelesen werden.

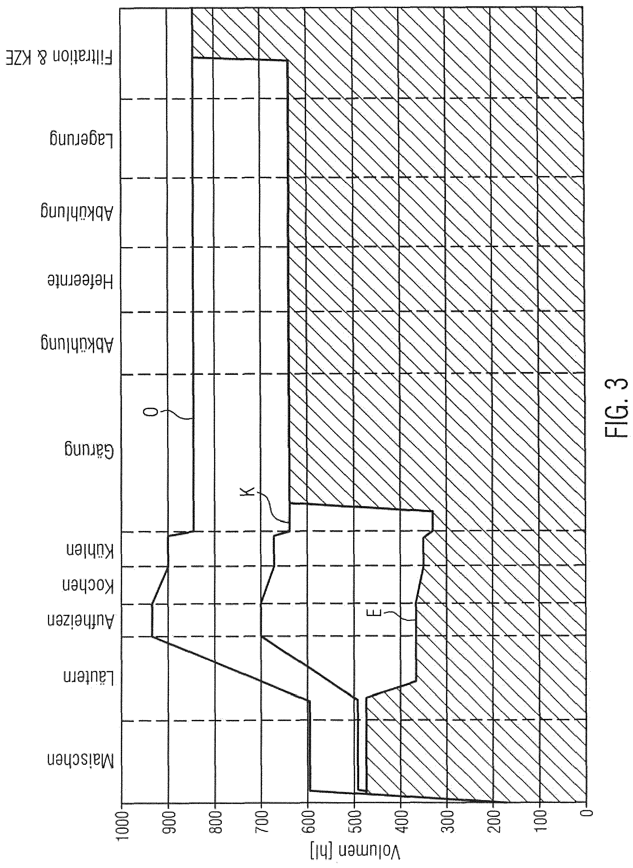

Figur 3 zeigt einen Vergleich der in jeweiligen Prozessstufen eines klassischen, eines High-Gravity- und eines Beispiels eines erfindungsgemäßen Brauvorgangs involvierten Volumina für den Fall, dass eine erste Verdünnung der Würze vor der Gärung erfolgt. Die schließlich gewünschte Verkaufsbierstammwürze wird durch eine zweite Verdünnung unmittelbar nach der abschließenden Filtration und vor der Kurzzeiterhitzung erreicht. Die obere Kurve O zeigt wie in Figur 2 die involvierten Volumina des klassischen Bierbrauverfahrens und die darunter liegende Kurve K diejenigen für das High-Gravity-Verfahren. Auch in diesem Beispiel sind die involvierten Volumina im klassischen Verfahren durchgängig deutlich gegenüber den im erfindungsgemäßen Brauvorgang involvierten Volumina erhöht. Mit Beginn des Gärprozesses sind die involvierten Volumina in diesem Beispiel des erfindungsgemäßen Verfahrens und des High-Gravity-Brauverfahrens im Wesentlichen gleich. In beiden Verfahren erfolgt eine Verdünnung unmittelbar nach der abschließenden Filtration und vor der Kurzzeiterhitzung. Im Vergleich zum High-Gravity-Brauverfahren erfolgen erfindungsgemäß die Verarbeitung der Würze in der Würzepfanne und das anschließende Kühlen jedoch bei geringeren Volumina, wodurch weniger primäre Energie aufgewendet werden muss. Es sei noch erwähnt, dass beim High-Gravity-Brauverfahren eine Verdünnung auch unmittelbar vor dem abschließenden Filtern erfolgen kann, und dass eine Kurzzeiterhitzung ausgelassen werden kann.

Ein konkretes zahlenmäßiges Beispiel für das erfindungsgemäße Verfahren kann wie folgt aussehen:

Vorteilhafterweise wird das Schrot der Braurohstoffe so dick wie möglich eingemaischt (es gibt auch Braurohstoffe welche ungeschrotet eingemaischt werden). Es soll ein Sud mit 180 hl Heißwürze mit einer Konzentration von 24,2 °P (° Plato) Ausschlagwürze produziert werden. Die Berechnung der Braurohstoffmenge erfolgt hier beispielsweise für 300 hl Heißwürze mit 18 °P Ausschlagwürzkonzentration. Bei einer Ausbeutedifferenz von 2 % und einem Extraktgehalt des Braurohstoffs von 78 % werden ca. 7195 kg Braurohstoff benötigt. Bei einer angestrebten Vorderwürzekonzentration von 23 °P errechnet sich ein Hauptguss von 188 hl. Die Maischemenge beträgt 238 hl. Zusätzlich zu den im Malz vorhandenen Enzymen können technische oder natürliche Enzyme zugesetzt werden. Hieraus können bei einer Vorderwürzeausbeute von 45 % ca. 131 hl Vorderwürze gewonnen werden. Es werden 56 hl als Nachguss geläutert und der Würzepfanne zugeführt. Bei einer Pfannenvollmenge von 187 hl bedarf es einer Gesamtverdampfung von 4 - 6 %, um so die gewünschte Ausschlag-würzekonzentration von 24,2 °P zu erhalten.

Die relativ geringe Extraktabnahme aufgrund der in die Würzepfanne geleiteten Nachgüsse wird durch das Kochen in der Würzepfanne wieder auf 24,2 °P angehoben. Somit können ca. 125 hl Nachgusswürze mit einem Extraktanteil von ca. 788 kg dem nachfolgenden Sud in dem Maischebehälter zugeführt werden. Durch die Wärme der Nachgüsse kann die Temperatur der Maische ohne externe Energiezufuhr angehoben werden, so dass ein Einmaischen bei ca. 45 bis 50 °C erfolgen kann. Wird bei diesem Beispiel ein Läuterbottich mit einem Durchmesser von 7,85 m verwendet, so ergibt sich eine Senkbodenbelastung von 149 kg/m², wodurch etwa 8 Sude pro Tag ermöglicht werden. Durch die reduzierte Schüttung aller Sude (nach dem ersten Sud bei diesem Verfahren) ergibt sich nur noch eine Senkbodenbelastung von 126 kg/m², was bei gleichem Läuterbottichdurchmesser etwa 10,5 Sude pro Tag entspricht. Während der gesamte Extrakt der Braurohstoffe im Brauprozess verbleibt, wird die Menge ab der Würzekochung um etwa 40 % reduziert. Die so erreichten Energieeinsparungen übertreffen diejenigen, des ebenfalls im Stand der Technik bekannten High-Gravity-Brauverfahrens. Zudem werden Leistungsspitzen der Medienversorgung (z. B. Dampf) wegen des verringerten Sudvolumens erniedrigt.

Die gesamte Warmwasserbilanz des Sudhauses wird im Vergleich zu dem oben beschriebenen Stand der Technik nicht negativ beeinflusst, da durch die Energieersparnis und durch die Warmwasserproduktion eines nach dem Kochen zu verwendenden Würzekühlers weniger Wasser produziert wird. In der Tat kann, da der Prozess des Einmaischens und derjenige des Läuterns/Filterns auf die ursprünglich veranschlagte Sudgröße bezogen ist, eine Warmwasserüberproduktion vermieden werden.

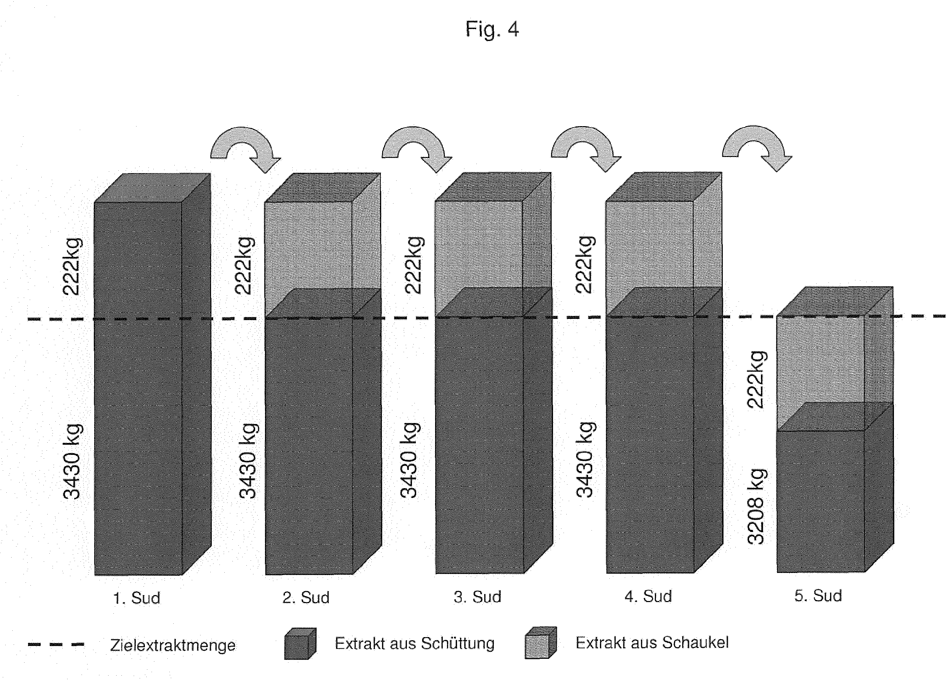

In Figur 4 ist eine Sudfolge unter Verwendung von Nachgüssen gezeigt. Die gestrichelte Linie zeigt die Zielextraktmenge, also die einer Würzepfanne oder einem mit dieser verbundenen Vorlaufgefäß zuzuführende Extraktmenge, an. Die oberhalb der gestrichelten Linie gezeigte Extraktmenge wird in ein Maischegefäß oder ein mit diesem verbundenes Puffergefäß geleitet. Der dunkle Bereich der Säule stellt die Extraktmenge dar, welche aus der Schüttung der Rohstoffe erfolgt. Der helle Bereich der Säulen zeigt die Extraktmenge, welche aus der Nachgussmenge des vorherigen Suds stammt. Der letzte Sud einer Sorte (hier der 5. Sud) oder der Produktionswoche wird so ausgelegt, dass mit dem Extrakt welcher aus der Schüttung der Rohstoffe und von der Nachgussmenge des vorherigen Suds stammt, die Zielextraktmenge erreicht wird.

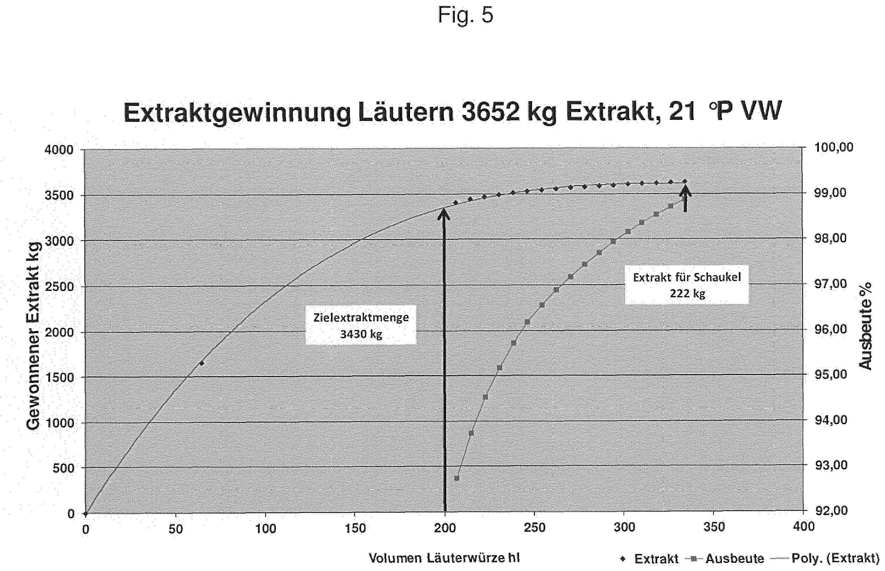

Ein Großteil des Extraktes wird aus einem verhältnismäßig geringen Volumen der Läuterwürze gewonnen, wie es in Figur 5 gezeigt ist. Bei rund 210 hl Läuterwürze beträgt die erreichte Ausbeute bereits 92,8 %. Um die Ausbeute beispielhaft um 6 % zu erhöhen, also eine Ausbeute von 98,8 % zu erreichen, müssen weitere rund 130 hl geläutert werden. Um die Ausbeute um lediglich 6 % zu erhöhen ist also eine Volumenzunahme von 38 % bezogen auf das Pfannevollvolumen (340 hl) erforderlich (340 hl = 100 % / 210 hl = 62 % 30 hl = 38 %).

Da das geläuterte Volumen gekocht werden muss, bedeutet dies einen enormen Einsatz von Primärenergie. Bei dem erfindungsgemäßen Verfahren reduziert sich in diesem Beispiel das Volumen um 41 %. Diese Menge muss somit nicht erhitzt/gekocht werden, woraus eine entsprechende Energieeinsparung resultiert.

Bei 200 hl gewonnener Läuterwürze sind etwa 3.430 kg Extrakt enthalten. Bei den 340 hl gewonnener Läuterwürze entspricht das 3.652 kg Extrakt, sprich eine Differenz von 222 kg Extrakt. Diese 222 kg entsprechen wiederum den 6 % der Gesamtextraktmenge bzw. der Ausbeute.

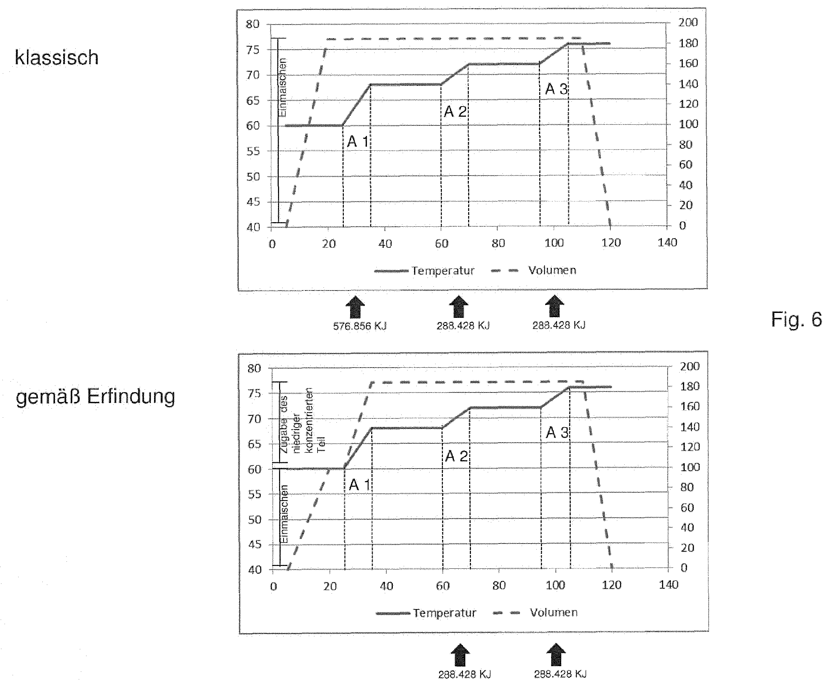

Figur 6 zeigt beispielhaft den Temperatur- und Volumenverlauf beim Maischen. Bei einem klassischen Maischverfahren (oben) werden Rasten bei verschiedenen Temperaturen gehalten. Dazwischen wird die Maische in den Aufheizphasen (A1, A2, A3) durch Einsatz von Primärenergie auf die nächste Temperaturstufe aufgeheizt. Gemäß dem in Figur 6 gezeigten Beispiel für das erfindungsgemäße Verfahren (unten) wird die erste Rast mit einer geringeren Maischemenge gehalten. Das Aufheizen erfolgt hier durch die Zugabe des Teils des Nachgusses aus dem vorherigen Sud, der den niedriger konzentrierten Teil der Würze (mit mindestens 5 % der Extraktmenge der Maische) umfasst. Da der zugegebene Nachguss eine Temperatur von 74°C hat, stellt sich durch das Mischen mit der Maische von 60 °C eine Temperatur von 68°C ein, die der nächsten Temperaturstufe entspricht. Daher entfällt bei der in der Figur 6 gezeigten Aufheizphase A1 in diesem Fall der Einsatz von Primärenergie (in diesem Beispiel, 576.856 KJ). Die Aufheizphasen A2 und A3 benötigen in diesem Beispiel weiterhin Primärenergie. Auch wenn es in diesem Beispiel nicht explizit dargestellt ist, so kann der niedriger konzentrierte Teil der Würze, welcher von dem vorherigen Sud stammt, auch zumindest teilweise zum Einmaischen verwendet werden.

## Patentansprüche

1. Verfahren zur Herstellung von Bier mit den Schritten:
Bereitstellen einer Maische;
Ausführen einer Fest-Flüssig-Trennung der Maische zum Gewinnen einer Würze;
Aufteilen der Würze in a) einen hochkonzentrierten Teil mit einer Vorderwürze und b) einen niedriger konzentrierten Teil, wobei der niedriger konzentrierte Teil zumindest 5 % der Extraktmenge der Maische, aufweist;
Verarbeiten des hochkonzentrierten Teils der Würze, wobei das Verarbeiten das Verdünnen des hochkonzentrierten Teils der Würze vor dem Abfüllen des Biers umfasst; und
Leiten zumindest eines Teils des niedriger konzentrierten Teils der Würze zu einem Maischvorgang; wobei
das Verarbeiten des hochkonzentrierten Teils der Würze das Kochen der Würze in einer Würzepfanne vor dem Verdünnen umfasst.

2. Verfahren nach Anspruch 1, in dem der niedriger konzentrierte Teil der Würze zumindest 65 % der Nachgussmenge, insbesondere zumindest 70 % der Nachgussmenge, umfasst.

3. Verfahren nach Anspruch 2, in dem der niedriger konzentrierte Teil der Würze Glattwasser umfasst.

4. Verfahren nach einem der vorangehenden Ansprüche, in dem das Verarbeiten des hochkonzentrierten Teils der Würze das Abkühlen der gekochten Würze vor, während oder nach dem Verdünnen umfasst.

5. Verfahren nach Anspruch 4, in dem das Verarbeiten des hochkonzentrierten Teils der Würze das Filtern der abgekühlten gekochten Würze vor dem Verdünnen umfasst und das Verdünnen mit Kaltwasser, insbesondere nicht erwärmtem Wasser, erfolgt.

6. Verfahren nach einem der Ansprüche 3 bis 5, in dem das Verarbeiten des hochkonzentrierten Teils der Würze das Vergären der Würze mithilfe von Hefekulturen umfasst und in dem das Verdünnen zumindest teilweise vor dem Vergären erfolgt.

7. Verfahren nach einem der vorhergehenden Ansprüche, das weiterhin das Aufbereiten des zumindest einen Teils des niedrigkonzentrierten Teils der Würze vor dem Leiten desselben in den Maischebehälter umfasst, wobei das Aufbereiten insbesondere unter Zugabe von Aktivkohle oder durch Filtration erfolgt.

8. Verfahren nach einem der vorhergehenden Ansprüche, in dem der zumindest eine Teil des niedriger konzentrierten Teils der Würze in einen Pufferbehälter und von diesem in den Maischebehälter geleitet wird.

9. Verfahren nach einem der Ansprüche 1 bis 7, in dem der zumindest eine Teil des niedriger konzentrierten Teils der Würze, insbesondere unter Verwendung eines Ausgleichsbehälters, direkt einem Maischvorgang zugeführt wird.

10. Verfahren nach einem der vorhergehenden Ansprüche, das weiterhin das Messen des Stammwürzegehalts der Würze am Ausgang eines zum Läutern verwendeten Geräts zur Fest-Flüssig-Trennung, insbesondere eines Läuterbottiches oder eines zum Filtern verwendeten Maischefilters, umfasst und in dem die Würze vom Ausgang des zum Läutern verwendeten Geräts zur Fest-Flüssig-Trennung in Reaktion auf das Messergebnis entweder a) in eine Würzepfanne oder ein mit dieser verbundenes Vorlaufgefäß oder b) in den Maischebehälter oder ein mit diesem verbunden Puffergefäß geleitet wird.

11. Verfahren gemäß einem der vorhergehenden Ansprüche, in dem zumindest ein Teil des niedriger konzentrierten Teils der Würze einer Maische während eines Maischprozesses zugeführt wird, um die Temperatur der Maische zu erhöhen.

12. Vorrichtung zum Brauen von Bier, umfassend
einen Maischebehälter, der dazu ausgebildet ist, eine Maische mit Bierrohstoffen und Wasser aufzunehmen;
ein Gerät zur Fest-Flüssig-Trennung, insbesondere ein Läuterbottich oder ein Maischefilter, das dazu ausgebildet ist, die Würze aus der Maische abzuläutern oder zu filtern;
eine Würzepfanne;
eine Leitungseinrichtung, die einen Ausgang des Geräts zur Fest-Flüssig-Trennung wahlweise mit a) der Würzepfanne oder einem mit dieser verbundenen Vorlaufgefäß oder b) dem Maischebehälter oder einem mit diesem verbunden Puffergefäß verbindet;
eine Steuerungseinrichtung, die dazu ausgebildet ist, einen hochkonzentrierten Teil der Würze mit einer Vorderwürze über die Leitungseinrichtung zu der Würzepfanne oder dem mit dieser verbundenen Vorlaufgefäß zu leiten und einen niedriger konzentrierten Teil der Würze, wobei der niedriger konzentrierte Teil zumindest 5 % der Extraktmenge der Maische, aufweist, zu dem Maischebehälter oder einem mit diesem verbunden Puffergefäß zu leiten; und
eine Verdünnungseinrichtung, die dazu ausgebildet ist, die Würze nach Austritt aus der Würzepfanne mit Wasser zu verdünnen.

13. Vorrichtung gemäß Anspruch 12, die weiterhin eine Messeinheit, die zum Messen des Stammwürzegehalts der Würze am Ausgang des zum Läutern verwendeten Geräts zur Fest-Flüssig-Trennung ausgebildet ist, umfasst, und in der die Steuerungseinrichtung dazu ausgebildet ist, den hochkonzentrierten Teil der Würze und den niedriger konzentrierten Teil der Würze in Reaktion auf die von der Messeinheit vorgenommenen Messung über die Leitungseinrichtung zu leiten.

14. Vorrichtung gemäß Anspruch 12 oder 13, weiterhin eine Gäreinrichtung umfassend, und in der die Verdünnungseinrichtung dazu ausgebildet, die Würze vor dem Eintritt in oder nach dem Austritt aus der Gäreinrichtung zu verdünnen.

## Claims

1. Method for producing beer, including the steps of:
preparing a mash;
carrying out a solid/liquid separation of the mash for obtaining wort;
dividing said wort into a) a highly concentrated part with a first wort, and b) a less concentrated part, said less concentrated part comprising at least 5 % of the extract quantity of mash;
processing the highly concentrated part of the wort, said processing comprising diluting said highly concentrated part of the wort before bottling the beer; and
conducting at least a portion of said less concentrated part of the wort to a mashing process; wherein
the processing of said highly concentrated part of the wort comprises the boiling of the wort in a wort kettle before dilution.

2. Method according to claim 1, wherein said less concentrated part of the wort comprises at least 65 % of the last sparge quantity, in particular at least 70 % of the last sparge quantity.

3. Method according to claim 2, wherein said less concentrated part of the wort comprises last runnings.

4. Method according to one of the preceding claims, wherein the processing of said highly concentrated part of the wort comprises cooling down the boiled wort before, during or after dilution.

5. Method according to claim 4, wherein the processing of said highly concentrated part of the wort comprises filtering the cooled-down boiled wort before dilution, and dilution is effected with cold water, in particular with non-heated water.

6. Method according to one of claims 3 to 5, wherein the processing of said highly concentrated part of the wort comprises the fermentation of the wort by means of yeast cultures, and wherein dilution is at least partially effected before fermentation.

7. Method according to one of the preceding claims, furthermore comprising the treatment of the at least one portion of the low-concentration part of the wort before the latter is introduced into the mash tank, said treatment being effected, in particular, with the addition of activated carbon or by filtration.

8. Method according to one of the preceding claims, wherein the at least one portion of said less concentrated part of the wort is conducted into a buffer tank and from there into the mash tank.

9. Method according to one of claims 1 to 7, wherein the at least one portion of said less concentrated part of the wort is directly supplied to a mashing process, in particular, using a compensation tank.

10. Method according to one of the preceding claims, furthermore comprising measuring the original wort content of the wort at the outlet of an appliance for solid/liquid separation used for lautering, in particular, a lauter tun or a mash filter used for filtering, and wherein said wort is conducted from the outlet of the appliance for solid/liquid separation used for lautering, in response to the measuring result, either a) into a wort kettle or an underback connected to it, or b) into the mash tank or a buffer vessel connected to it.

11. Method according to one of the preceding claims, wherein at least a portion of said less concentrated part of the wort is supplied to a mash during a mashing process to increase the temperature of said mash.

12. Device for brewing beer, comprising
a mash tank which is designed to receive a mash with brewing raw materials and water;
an appliance for solid/liquid separation, in particular a lauter tun or a mash filter, which is designed to lauter or filter the wort out of the mash;
a wort kettle;
a piping installation which connects an outlet of the appliance for solid/liquid separation selectively with a) the wort kettle or an underback connected to it, or b) the mash tank or a buffer vessel connected to it;
a control unit which is designed to conduct a highly concentrated part of the wort with a first wort via the piping installation to the wort kettle or the underback connected to it, and a less concentrated part of the wort to the mash tank or a buffer vessel connected to it, said less concentrated part comprising at least 5 % of the extract quantity of the mash; and
a dilution device which is designed to dilute the wort with water after it has exited from the wort kettle.

13. Device according to claim 12, furthermore comprising a measuring unit configured to measure the original wort content of the wort at the outlet of the appliance for solid/liquid separation used for lautering, and wherein the control unit is designed to conduct the highly concentrated part of the wort and the less concentrated part of the wort in response to the measurement effected by the measuring unit via the piping installation.

14. Device according to claim 12 or 13, furthermore comprising a fermentation device and in which said dilution device is designed to dilute the wort before it enters the fermentation device or after it has exited from the latter.

## Revendications

1. Procédé de fabrication de bière comprenant les étapes suivantes :
la préparation d'un brassin ;
la réalisation d'une séparation solide-liquide du brassin pour obtenir un moût ;
la séparation du moût en a) une partie hautement concentrée contenant un premier moût et b) une partie faiblement concentrée, la partie faiblement concentrée comprenant au moins 5 % de la quantité d'extrait du brassin ;
le traitement de la partie hautement concentrée du moût, le traitement comprenant la dilution de la partie hautement concentrée du moût avant le remplissage de la bière ; et
- l'acheminement d'au moins une partie de la partie faiblement concentrée du moût vers un processus de brassage ;
le traitement de la partie hautement concentrée du moût comprenant la cuisson du moût dans une chaudière à moût avant la dilution.

2. Procédé selon la revendication 1, selon lequel la partie faiblement concentrée du moût comprend au moins 65 % de la quantité de moût secondaire, notamment au moins 70 % de la quantité de moût secondaire.

3. Procédé selon la revendication 2, selon lequel la partie faiblement concentrée du moût comprend les dernières eaux de lavage.

4. Procédé selon l'une quelconque des revendications précédentes, selon lequel le traitement de la partie hautement concentrée du moût comprend le refroidissement du moût cuit avant, pendant ou après la dilution.

5. Procédé selon la revendication 4, selon lequel le traitement de la partie hautement concentrée du moût comprend la filtration du moût cuit refroidi avant la dilution et la dilution avec de l'eau froide, notamment de l'eau non chauffée.

6. Procédé selon l'une quelconque des revendications 3 à 5, selon lequel le traitement de la partie hautement concentrée du moût comprend la fermentation du moût à l'aide de cultures de levures et selon lequel la dilution a lieu au moins en partie avant la fermentation.

7. Procédé selon l'une quelconque des revendications précédentes, qui comprend en outre la préparation de ladite au moins une partie de la partie faiblement concentrée du moût avant l'acheminement de celle-ci dans le contenant de brassage, la préparation ayant notamment lieu avec ajout de charbon actif ou par filtration.

8. Procédé selon l'une quelconque des revendications précédentes, selon lequel ladite au moins une partie de la partie faiblement concentrée du moût est acheminée dans un contenant tampon et à partir de celui-ci dans le contenant de brassage.

9. Procédé selon l'une quelconque des revendications 1 à 7, selon lequel ladite au moins une partie de la partie faiblement concentrée du moût est introduite directement dans un processus de brassage, notamment en utilisant un contenant d'égalisation.

10. Procédé selon l'une quelconque des revendications précédentes, qui comprend en outre la mesure de la teneur en moût primitif du moût à la sortie d'un appareil utilisé pour la clarification pour la séparation solide-liquide, notamment d'une cuve-filtre ou d'un filtre à brassin utilisé pour la filtration, et selon lequel le moût est acheminé depuis la sortie de l'appareil utilisé pour la clarification pour la séparation solide-liquide en réaction au résultat de la mesure a) dans une chaudière à moût ou un contenant en amont relié avec celle-ci ou b) dans le contenant de brassage ou un contenant tampon relié avec celui-ci.

11. Procédé selon l'une quelconque des revendications précédentes, selon lequel au moins une partie de la partie faiblement concentrée du moût est introduite dans un brassin pendant un processus de brassage afin d'augmenter la température du brassin.

12. Dispositif pour le brassage de bière, comprenant :
un contenant de brassage, qui est configuré pour recevoir un brassin contenant des matières premières de bière et de l'eau ;
un appareil pour la séparation solide-liquide, notamment une cuve-filtre ou un filtre à brassin, qui est configuré pour clarifier ou filtrer le moût à partir du brassin ;
une chaudière à moût ;
un dispositif d'acheminement, qui relie une sortie de l'appareil pour la séparation solide-liquide au choix avec a) la chaudière à moût ou un contenant en amont relié avec celle-ci ou b) le contenant de brassage ou un contenant tampon relié avec celui-ci ;
un dispositif de commande, qui est configuré pour acheminer une partie hautement concentrée du moût contenant un premier moût par le biais du dispositif d'acheminement vers la chaudière à moût ou le contenant en amont relié avec celle-ci et pour acheminer une partie faiblement concentrée du moût, la partie faiblement concentrée comprenant au moins 5 % de la quantité d'extrait du brassin, vers le contenant de brassage ou un contenant tampon relié avec celui-ci ; et
un dispositif de dilution, qui est configuré pour diluer le moût avec de l'eau après la sortie de la chaudière à moût.

13. Dispositif selon la revendication 12, qui comprend en outre une unité de mesure, qui est configurée pour la mesure de la teneur en moût primitif du moût à la sortie de l'appareil utilisé pour la clarification pour la séparation solide-liquide, et dans lequel le dispositif de commande est conçu pour acheminer la partie hautement concentrée du moût et la partie faiblement concentrée du moût par le biais du dispositif de conduite en la réaction à la mesure réalisée par l'unité de mesure.

14. Dispositif selon la revendication 12 ou 13, comprenant en outre un dispositif de fermentation, et dans lequel le dispositif de dilution est conçu pour diluer le moût avant l'entrée dans ou après la sortie du dispositif de fermentation.
